# EUROPÄISCHE PATENTSCHRIFT

(11) **EP 0 601 429 B1**
(45) Veröffentlichungstag und Bekanntmachung des Hinweises auf die Patenterteilung: **12.03.1997**
(21) Anmeldenummer: 93119184.5
(22) Anmeldetag: 29.11.1993
(51) Int. Cl.: E01C 11/22, E01C 5/00

(54) **Betonsteine mit durchgehenden Löchern zur Wasserabführung**
Perforated drainage concrete blocks
Blocs en béton avec trous pour l'écoulement d'eau

(30) Priorität: 09.12.1992 DE 4241414
(43) Veröffentlichungstag der Anmeldung: 15.06.1994
(73) Patentinhaber: METTEN Stein + Design GmbH & Co. KG, 51491 Overath (DE)
(72) Erfinder: Metten, Josef, D-51467 Bergisch Gladbach (DE)
(74) Vertreter: Nau, Walter, Dipl.-Ing.

(56) Entgegenhaltungen:
- EP-A- 0 066 002
- EP-A- 0 303 017
- DE-A- 2 442 505
- DE-A- 2 632 660
- DE-A- 2 655 867
- DE-U- 1 879 213
- DE-U- 7 245 452

## Beschreibung

Die Erfindung bezieht sich auf Betonsteine, Ziegelsteine, Natursteine, Steine aus Kunststoff und dergl. mit durchgehenden dünnen Löchem zur Wasserabführung, sogenannte Lochsteine, insbesondere Pflastersteine verschiedener Formate und Größen, die auf Regen ausgesetzten Flächen, wie Straßen, Wegen, Plätzen, Parkplätzen und Baumscheiben, verlegt werden und an den seitlichen Rändem mit Verfugemitteln verfüllt werden.

Derartige Lochsteine sind beispielsweise durch das DE-GU-72 45 452 oder die DE-A-37 19 245 bekannt. Durch die Löcher der Lochsteine kann in vorteilhafter Weise Regenwasser abfließen, ohne daß Pfützen und unerwünschte Wasserflächen entstehen. Vor allen Dingen aber soll das Regenwasser in den Untergrund versickem und dem Grundwasser zugeführt werden, statt in die Kanalisation zu fließen. Von Bedeutung ist dabei, daß die Größe der Löcher nicht so groß sein darf, daß Probleme beim Begehen der Flächen entstehen. Beispielsweise dürfen Absätze von Damenschuhen sich nicht in den Löchem verklemmen. Daher sollen die Löcher einen Durchmesser von ca. 5 bis 20 mm haben. Nicht verwechselt werden dürfen derartige Lochsteine mit Steinen, die große Öffnungen haben, in denen Erdreich eingefüllt wird (Rasengittersteine usw.), damit die Flächen begrünen.

Zunächst hat man versucht, derartige Lochsteine zu verlegen, ohne die Steine zu verfugen bzw. einzusanden, um zu verhindern, daß sich die Löcher mit Sand beim Verfugen füllen und der Wasserabfluß gefährdet ist. Dies hat sich jedoch als ungünstig herausgestellt, da die Steine gegeneinander nicht fest genug abgestützt sind und bei Belastungen der Flächen, beispielsweise beim Befahren der Flächen, die Lochsteine nicht fest genug sitzen.

Aus der DE-A-2632660 sind Betonverbundsteine bekannt, die zur Wasserabfuhr mit schlitzförmigen Öffnungen versehen sind. Diese schlitzförmigen Öffnungen werden mit Kunststoffkappen während der Verlegung der Betonverbundsteine verschlossen und nach der Fertigstellung der Straße entfernt. Dieses Verfahren ist sehr aufwendig bezüglich Material- und Arbeitsaufwand.

Aus der EP-A- 0 066 002 ist eine keramische Platte mit einer entfernbaren Beschichtung bekannt. Dabei dient die Beschichtung ausschließlich dem Femhalten von Rückständen der Verlege- und Fugenwerkstoffe von der Oberfläche der grobkeramischen Oberfläche der Platte.

Der Erfindung liegt die Aufgabe zugrunde, die Lochsteine so zu modifizieren, daß ein Verfugen bzw. Einsanden möglich ist, ohne daß die Abflußlöcher ebenfalls verfugt werden bzw. sich mit Sand füllen. Hierbei ist bei der Lösung auf einen geringen Material- und Arbeitsaufwand zu achten.

Die Aufgabe wird durch die kennzeichnenden Merkmale des Anspruchs 1 gelöst. Dadurch wird sichergestellt, daß die Lochsteine, wie bisher üblich, verlegt und eingesandet bzw. verfugt werden können, ohne daß dabei Sand bzw. Fugematerial in die Löcher gelangt und dadurch den Abfluß von Wasser behindert. Nach dem Verlegen und fertigen Verfugen bzw. Einsanden werden die Löcher geöffnet, so daß die volle Funktionsfähigkeit der Löcher gewährleistet ist. Dabei erfolgt der Verschluß der Löcher durch ein Füllmittel, das später durch Zugabe von Wasser fließfähig wird. Das Füllmittel kann vorschlagsgemäß eine Masse enthalten, die nach Zugabe von Wasser plastisch verformbar ist, anschließend sich verfestigt und durch Zugabe von Wasser verflüssigt.

Bei der Masse handelt es sich in Weiterbildung beispielsweise um Stärke, vorzugweise Getreide-oder Weizenstärke oder um Zucker, beispielsweise in Form von Sirup oder Melasse oder um Mehl, z.B. Getreide- oder Kartoffelmehl. Zusätzlich enthält das Füllmittel vorschlagsgemäß Sand, in feiner Form, beispielsweise als Quarzsand oder Quarzmehl. Von Bedeutung ist, daß derartige Materialien umweltverträglich sind und keine Schädigungen des Untergrundes und Grundwassers verursachen.

In vorteilhafter Weise wird daher der Masse, die, wie bereits erwähnt, im wesentlichen aus Stärke oder Zucker besteht, Sand zugemischt und mit Wasser soweit ergänzt, daß eine Paste entsteht. Diese Paste wird auf die Enden der Löcher aufgetragen, so daß die oberen Enden der Löcher verschlossen sind. Das Auftragen kann in vorteilhafter Weise direkt nach dem Pressen der Betonsteine oder nach dem Abbinden erfolgen. Das pastenartige Füllmittel kann dann durch Abgabe von Wasser sich verfestigen bzw. aushärten. Die Pflastersteine werden nach ihrem Trocknen verpackt, wobei bei den Lochsteinen, die mit dem zuvor beschriebenen Füllmittel behandelt sind, darauf zu achten ist, daß die Verpackung nässe- bzw. regendicht ist. Die Betonsteine, Ziegelsteine, Natursteine, Steine aus Kunststoff und dergl. werden danach, wie üblich, an der Baustelle verlegt, eingesandet bzw. verfugt, ggfs. mittels eines Rüttlers verdichtet und anschließend mit Wasser abgespritzt. Dabei verflüssigt sich die in dem Füllmittel enthaltene Masse, z.B. die Stärke, so daß das Füllmittel abgewaschen wird und die Enden der Löcher frei werden. Auf das Abspritzen mit Wasser kann verzichtet werden, da auch Regen in kurzer Zeit eine Verflüssigung bewirkt. Der Sand, der als Quarzsand oder Quarzmehl dem Füllmittel zugegeben ist, wirkt sich dabei nicht negativ aus, da er so fein ist und eine so geringe Menge darstellt, daß er ggfs. durch die Löcher abfließen kann.

Der Verschluß der Löcher kann auch durch Klebestreifen erfolgen. Die Klebestreifen können Selbstklebestreifen sein, wobei das Material der Klebestreifen aus einem Werkstoff besteht, der sich in Wasser löst, sodaß er ähnlich wie das Füllmittel weggeschwämmt werden kann.

Der Verschluß der Löcher kann auch durch ein Füllmaterial erfolgen, das beim Auftragen plastisch verformbar ist und danach aushärtet. Dabei kann es sich um dauerelastisches Fugenmaterial handeln, das Silicon oder dergl. enthält, oder um Lehm- oder Tonmassen. Diese werden nach der Wasserabgabe bzw. nach dem Aushärten hart oder fest und können so leicht abgezogen oder abgeschabt werden.

Erfindungsgemäß wird das Füllmittel mittels Düsen bzw. Düsenköpfen entweder als Anhäufung auf die Enden der Löcher oder als Streifen über die Lochreihen aufgetragen und anschließend eingeebnet. Das Einebnen ist kein Vorgang, der unbedingt erfolgen muß, er ist vorteilhaft, wenn die Betonsteine auch an ihrer Unterseite eben ausgebildet sind, so daß nach dem Einebnen bei aufeinander abgesetzten Betonsteinen kein Verschließen der Löcher an der Unterseite erfolgt. Das Einebnen kann in vorteilhafter Weise durch Rollen, Spachteln und dergl. erfolgen.

Die Düsenköpfe können an einer Maschine befestigt sein, die entsprechend einem Roboter ausgebildet ist, so daß ein automatisches Auftragen des Füllmittels erfolgt. Die Düsen können ebenfalls über Ventile automatisch gesteuert werden.

Je nach Arbeitsvorgang kann es vorteilhaft sein, wenn das Füllmittel nach dem Auftragen und ggfs. nach dem Einebnen einer Wärmebehandlung unterzogen wird.

Zur weiteren Erläuterung der Erfindung wird auf die Zeichnungen verwiesen, in denen Ausführungsbeispiele der Erfindung vereinfacht dargestellt sind.
Es zeigen:
- Fig. 1: eine perspektivische Ansicht eines erfindungsgemäßen Betonsteins mit Löchern, deren obere Enden mittels Füllmittel verschlossen sind,
- Fig. 2: einen Schnitt durch den Betonstein nach Fig. 1, bei dem jedoch das Füllmittel eingeebnet ist,
- Fig. 3: eine Draufsicht eines Betonsteins entsprechend Fig. 1, bei dem eine Rolle zum Einebnen des Füllmittels dargestellt ist und
- Fig. 4: einen Schnitt durch den Pflasterstein gemäß Fig. 2, bei der zusätzlich Düsen mit einer Halterung zum Auftragen des Füllmittels dargestellt sind.

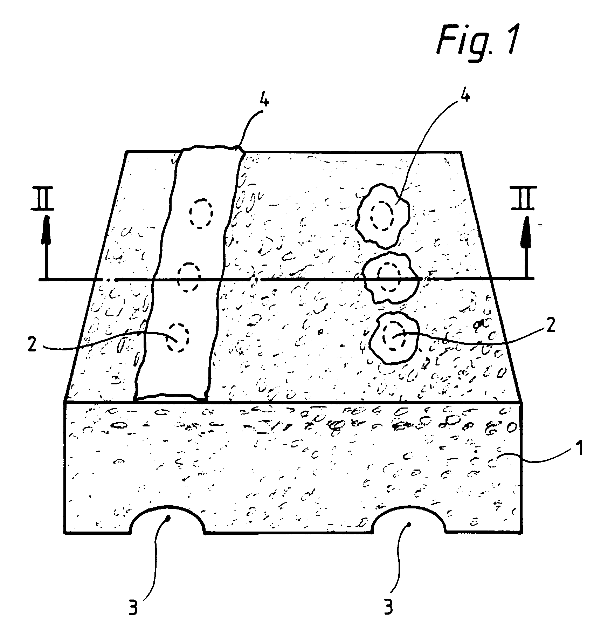

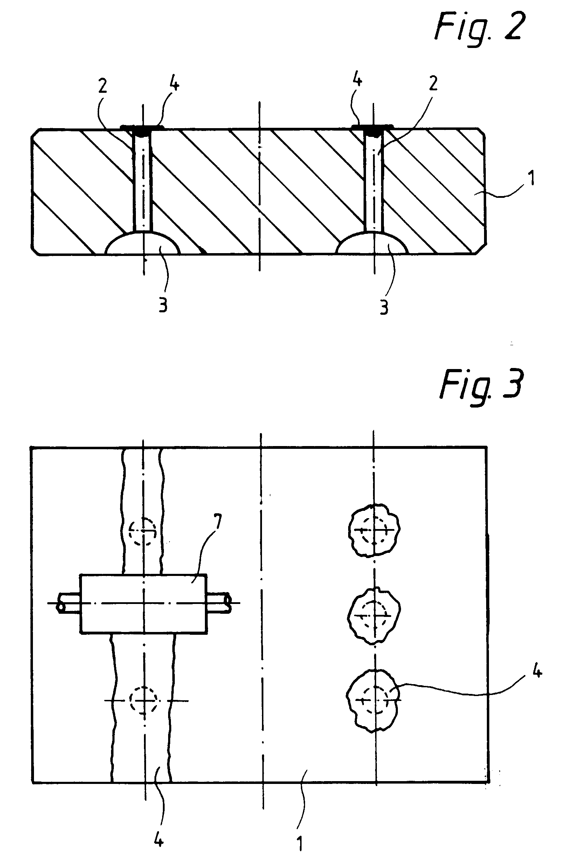

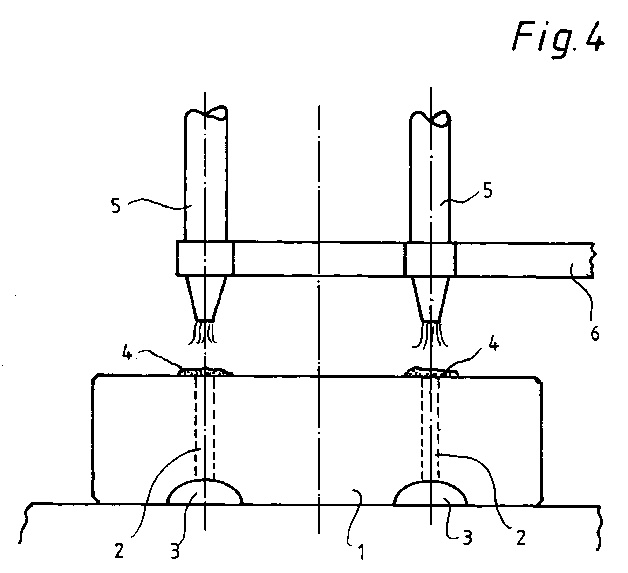

In den Figuren 1 bis 4 ist, soweit im einzelnen dargestellt, mit 1 ein Betonstein bezeichnet, der durchgehende Löcher 2 aufweist, die in einer auf der Unterseite des Betonsteins 1 angebrachten bogenförmigen Rinne 3 münden. Die oberen Enden der Löcher 2 sind mit einem Füllmittel 4 verschlossen, das mittels Düsen 5, die an einer Halterung 6 befestigt und geführt sind, aufgetragen wird. Die Düsen 5 und die Halterung 6 sind, im einzelnen nicht dargestellt, automatisch entsprechend einem Roboter gesteuert, so daß das Füllmittel 4 exakt und mit großer Ge schwindigkeit auf die Enden der Löcher 2 aufgetragen werden kann. Wie in Fig. 3 dargestellt, kann das Füllmittel 4 nach dem Auftragen mittels einer Rolle 7 eingeebnet werden. Selbstverständlich kann anstelle einer Rolle 7 auch ein anderes Werkzeug, beispielsweise eine Spachtel, verwendet werden. In Fig. 2 ist gezeigt, daß das Füllmittel 4 nach seiner Einebnung nur einen minimalen Raum einnimmt, so daß auch bei Betonsteinen 1, die keine am unteren Ende der Löcher 2 angeordnete Rinnen 3 aufweisen, die unteren Enden der Löcher 2 durch das Füllmittel 4 nicht verstopft werden.

Es sei darauf hingewiesen, daß es unwichtig ist, aus welchem Material die Steine, Quader, Platten und dergl. bestehen oder hergestellt sind, da es nur darauf ankommt, Löcher zeitweise zu verschließen. Die Erfindung ist daher auf alle Materialien und alle Formen von Steinen, Quadern, Platten und dergl. anwendbar.

## Patentansprüche

1. Betonsteine, Ziegelsteine, Natursteine, Steine aus Kunststoff und dergl. mit durchgehenden, dünnen Löchern (2) zur Wasserabführung, sogenannte Lochsteine, insbesondere Pflastersteine verschiedener Formate und Größen, die auf Regen ausgesetzten Flächen, wie Straßen, Wegen, Plätzen, Parkplätzen und Baumscheiben, verlegt werden und an den seitlichen Rändem mit Verfugemittel verfüllt werden, wobei die Löcher (2) zumindest an ihrem oberen Ende verschlossen sind,
**dadurch gekennzeichnet,** daß die Löcher (2) durch ein Füllmittel (4) verschlossen sind, das durch Zugabe von Wasser fließfähig wird, um ein Verfüllen der Löcher beim Verfugen zu verhindern.

2. Betonsteine nach Anspruch 1,
**dadurch gekennzeichnet**, daß das Füllmittel (4) eine Masse enthält, die nach Zugabe von Wasser plastisch verformbar ist, anschließend sich verfestigt und durch Zugabe von Wasser wieder auflöst.

3. Betonsteine nach einem der Ansprüche 1 oder 2,
**dadurch gekennzeichnet**, daß das Füllmittel (4) Stärke, vorzugsweise Getreide- oder Kartoffelstärke, enthält.

4. Betonsteine nach einem der vorhergehenden Ansprüche,
**dadurch gekennzeichnet**, daß das Füllmittel (4) Mehl, vorzugsweise Getreide- oder Kartoffelmehl, enthält.

5. Betonsteine nach einem der vorhergehenden Ansprüche,
**dadurch gekennzeichnet**, daß das Füllmittel (4) Zucker, vorzugsweise in Form von Sirup oder Melasse, enthält.

6. Betonsteine nach einem der vorhergehenden Ansprüche,
**dadurch gekennzeichnet**, daß das Füllmittel (4) Sand, vorzugsweise Quarzsand oder Quarzmehl, enthält.

7. Betonsteine nach einem der vorhergehenden Ansprüche,
**dadurch gekennzeichnet**, daß das Füllmittel (4) eine Paste aus einer Mischung von Stärke und/oder Mehl und/oder Zucker mit Sand und Wasser ist.

8. Verfahren zum Herstellen eines Steines nach Anspruch 1,
**dadurch gekennzeichnet**, daß das Füllmittel (4) oder das Füllmaterial mittels Düsen (5) bzw. Düsenköpfen als Anhäufung auf die Enden der Löcher (2) aufgetragen, anschließend eingeebnet wird und durch Trocknung erhärtet.

9. Verfahren nach Anspruch 8,
**dadurch gekennzeichnet**, daß das Füllmittel (4) oder das Füllmaterial nach dem Auftragen zur Trocknung einer Wärmebehandlung unterzogen wird.

## Claims

1. Concrete blocks, clay bricks, stones, plastic blocks or the like, formed with thin through holes (2) for discharging water, so-called perforated bricks, especially paving-stones of various shapes and sizes, laid on surfaces exposed to rain such as seats, alleys, squares, car parks or circular beds around trees and filled with a pointing agent at the edges, wherein the holes (2) are sealed at least at their top end, **characterised in that** the holes (2) are sealed by a filler which is made liquid by addition of water, in order to prevent the holes being filled during pointing.

2. Blocks according to claim 1, **characterised in that** the filler (4) comprises a substance which becomes plastically deformable after addition of water, subsequently solidifies, and disintegrates on addition of water again.

3. Blocks according to claim 1 or 2, **characterised in that** the filler (4) comprises starch, preferably corn or potato starch.

4. Blocks according to any of the preceding claims, **characterised in that** the filler (4) comprises flour, preferably corn or potato flour.

5. Blocks according to any of the preceding claims, **characterised in that** the filler (4) comprises sugar, preferably in the form of syrup or molasses.

6. Blocks according to any of the preceding claims, **characterised in that** the filler (4) comprises sand, preferably quartz sand or powdered quartz.

7. Blocks according to any of the preceding claims, **characterised in that** the filler (4) is a paste of starch and/or flour and/or sugar mixed with sand and water.

8. A method of producing a block according to claim 1, **characterised in that** the filler (4) or filling material is applied by nozzles (5) or nozzle heads in the form of an accumulation on the ends of the holes (2) and is then flattened and hardened by drying.

9. A method according to claim 8, **characterised in that** the filler (4) or filling material is dried by heat treatment after application.

## Revendications

1. Eléments en béton, en brique, en pierre naturelle ou en plastique ou objet analogues traversés par des trous étroits (2) servant à l'évacuation de l'eau, appelés pierres à trous, en particulier pavés de différentes tailles et de différents formats qui sont utilisés pour réaliser des surfaces recevant la pluie, telles que des routes, des chemins, des places, des parkings et des entourages d'arbres et qui le long de leurs bords sont garnis de matériaux de jointoiement tandis que les trous (2) sont obturés au moins à leurs extrémités supérieures,
caractérisés en ce que
ces trous (2), afin d'éviter qu'ils soient bouchés lors de l'opération de jointoiement, sont obturés par un agent de remplissage (4) qui devient fluide par addition d'eau.

2. Elément selon la revendication 1,
caractérisé en ce que
l'agent de remplissage (4) a pour base une masse qui peut, par addition d'eau, se déformer plastiquement, puis se durcir et à nouveau se dissoudre par addition d'eau.

3. Elément selon une des revendications 1 ou 2,
caractérisé en ce que
l'agent de remplissage (4) contient de l'amidon, de préférence de céréales ou de pommes de terre.

4. Elément selon une des revendications précédentes,
caractérisé en ce que
l'agent de remplissage (4) contient de la farine, de préférence de la farine de blé ou de la fécule.

5. Elément selon une des revendications précédentes,
caractérisé en ce que
l'agent de remplissage (4) contient du sucre, de préférence sous forme de sirop ou de mélasse.

6. Elément selon une des revendications précédentes, caractérisé en ce que
l'agent de remplissage (4) contient du sable, de préférence sous forme de sable quartzeux ou de quartz en poudre.

7. Elément selon l'une des revendications précédentes,
caractérisé en ce que
l'agent de remplissage (4) est une pâte à base d'un mélange de céréale et/ou de farine et/ou de sucre, avec du sable et de l'eau.

8. Procédé pour réaliser un élément selon la revendication 1,
caractérisé en ce que
l'agent de remplissage (4) ou le matériau de remplissage est disposé par des buses (5) c'est-à-dire par les extrémités de celles-ci, en tas sur les extrémités des trous (2), puis nivelé à plat et durci par séchage.

9. Procédé selon la revendication 8,
caractérisé en ce que
l'agent de remplissage (4) ou le matériau de remplissage, après étalement, est soumis à un traitement thermique assurant son séchage.
